# EUROPEAN PATENT SPECIFICATION

(11) **EP 3 437 490 B1**
(45) Date of publication and mention of the grant of the patent: **14.10.2020**
(21) Application number: 17382548.0
(22) Date of filing: 04.08.2017
(51) Int. Cl.: A23L 27/00

(54) **TASTE ENHANCER LIQUID COMPOSITION**
FLÜSSIGE GESCHMACKSVERSTÄRKERZUSAMMENSETZUNG
COMPOSITION LIQUIDE EXHAUSTRICE DE GOÛT

(43) Date of publication of application: 06.02.2019
(73) Proprietor: The GB Foods, SA, 08902 Barcelona (ES)
(72) Inventor:
(74) Representative: Juncosa Miró, Jaime

(56) References cited:
- WO-A1-2011/076528
- DATABASE WPI Week 201444 Thomson Scientific, London, GB; AN 2014-M57754 XP002774599, & CN 103 766 835 A (LI X) 7 May 2014 (2014-05-07)
- DATABASE WPI Week 199916 Thomson Scientific, London, GB; AN 1999-183783 XP002774600, & JP H11 32719 A (BERU SHOKUHIN KK) 9 February 1999 (1999-02-09)

## Description

### Field of the art

The present invention concerns the field of flavouring compositions, in particular those that enhance or improve the taste of various culinary preparations. More in particular, the proposed invention consists of a taste-enhancing liquid composition, that is, it enhances the taste of a culinary preparation, but without masking the original taste of the ingredients thereof, that is, preserving the taste that the culinary preparation had before the addition of the proposed taste-enhancing composition.

Moreover, the composition object of the present invention, given its fluid condition, is easily dispensable over any prepared food surface and it allows to be regularly or uniformly spread both while hot or cold (as it does not burn or deteriorate in contact with direct heat sources), the versatility of its use being derived therefrom, because it can be used both in liquid cooking processes (stews and casseroles) and in dry cooking processes (grill, frying-pan, oven) or even while cold. It can be added during any preparation phase, that is, it can be used before (in marinates), while cooking and even afterwards (while cold).

The packaged composition of the invention is stable at room temperature, ready to be served and it does not contain oil or taste-enhancing additives.

A use of the composition for its application over culinary preparations is also proposed.

### Definitions

In the present descriptive specification, a series of terms are employed that will be understood according to the following definitions:
- by flavourings it will be understood those agents that provide taste, taste enhancers, herbs, spices, carbohydrates such as sugars, yeast extracts, vegetable extracts, organic acids and salts obtained from foods and any mixture thereof;
- salt: sodium chloride, but potassium chloride or any low-sodium salt can also be used that will provide a taste feeling similar to sodium chloride;
- self-stable: it designates the stability property of the product during a certain storage time period after the production, in which the product maintains its microbiological and organoleptic safety at a specific storage temperature; typically, self-stability is considered for a period of three months at a room temperature of 20 degrees, but preferably 6 months at 20 degrees; and more preferably 12 months;
- gums: additives that join or link the particles of the liquid composition and that, depending on the extent of presence therein, will determine the fluidity of the liquid composition.

### State of the art

In the state of the art, in the field of concentrates for food preparation, the proposal explained in international patent application WO2014/053287 is known, which describes a composition consisting of a self-stable liquid concentrate characterised by having a water content of 30-40% in weight, a flavouring content of 10-45% in weight, a salt content of 6-20% and a xanthan gum content of 0.05-0.2% in weight. Further, in this composition the inclusion of 2-15% in weight of oil and 10-40% in weight of non-gelled starch is considered essential.

The present invention proposes a self-stable liquid substance different from that disclosed in said background art, for a different use, which is the taste enhancement of food preparations, without masking the taste of the main ingredients, and in which neither oil nor fats are used, and, in one preferred embodiment, starch is not used either in any of its variations, and in particular non-gelled starch. In addition, the presence of water is characteristic in the composition of the present invention at a much higher ratio, practically double, relative to that of the water contained by the liquid concentrate of WO2014/053287.

CN103766835A1 discloses an onion juice seasoning that comprises onion, salt, spices, stabilizing agent, i.e. a thickener, citric acid, water, preservative and flavouring agent. The onion juice seasoning is easy to store, has mellow taste, unique flavour, and thickness uniformity, removes fishy smell and increases fragrance of product.

JP02997841B2 refers to a high viscosity seasoning manufacturing method for beef, pork, chicken meat and fish, in which three sorts of viscous agents such as an oligosaccharide of a xanthan gum, corn starch and a modified starch are mixed through a series of processes in predetermined proportions and heated for 10-20 minutes at a temperature of 80-95 ºC.

WO2011/076258A1 discloses a savoury food concentrate in the form of a gel, for preparing a bouillon, a soup, a sauce, a gravy or a seasoning comprising a gelling system and a liquid phase comprising a liquid polyol and salt.

The present invention proposes a particular combination of ingredients with great umami (pleasant and intense taste) capacity, so that the proposed liquid composition achieves an enhancing power of the natural taste of the food to which it is applied, without masking it. This allows the use of the liquid composition of the invention in a large variety of recipes with very different ingredients and various culinary preparations.

### Brief description of the invention

The present invention proposes in a first aspect a taste-enhancing liquid composition that includes water, flavouring and a thickener characterised in that the composition comprises a combination of the following elements in the following proportions, together adding up to 100%:
- water, from 75 to 83% in weight relative to the total weight of the composition and, in one preferred embodiment, with a proportion from 77.04 to 79.2%;
- flavouring, from 1% to 6% in weight relative to the total weight of the composition;
- salt, from 11% to 15% in weight relative to the total weight of the composition and, in one preferred embodiment, with a proportion of 14.5%;
- thickener preparation, from 0.15% to 0.24% in weight relative to the total weight of the composition, formed by a mixture of xanthan gum and guar gum;
- other non-fatty components, from 0.8% to 2% in weight relative to the total weight of the composition.
with the characteristic that the liquid composition does not comprise oil or fats. The flavouring can include a sugar content up to 3.75% in weight relative to the total weight of the composition.

According to one preferred exemplary embodiment, and in relation to said thickener preparation, the proportion of guar gum in weight relative to the total weight of the composition is about 20% smaller than the xanthan gum proportion, although other lower proportions, in the order of 17% smaller, would be acceptable.

In addition, the composition does not comprise starch either, so it is even more significantly separated from the referred WO2014/053287 background art.

As has been said, the proposed taste-enhancing liquid composition has been devised for enhancing the taste of a culinary preparation, but without masking the original taste before the addition of said composition. Thus, the salt content is very low and the flavourings, though they have been specified as being up to 6%, they do not reach 4% in the majority of formulations. This allows it to be used in a large variety of recipes with very different ingredients and various culinary preparations.

Said composition is intended for soaking a foodstuff by pouring, given its liquid condition, both while cold (flowing adequately) and hot, achieving a slow expansion or spreading over the surface of the food and an effective penetration in the food matter to be covered.

Given the large amount of water present in the composition, when this contacts a hot surface, great evaporation is produced leaving very little exposed solid residue, so that this is kept from burning.

In addition, the proposed composition can be added to a given food preparation in any preparation phase, that is, it is highly versatile in its use because it can be used both in liquid cooking processes, stews and casseroles, and in dry cooking processes, such as grill, frying-pan or oven, and even cold.

In contrast with other taste-enhancing compositions, in the case of the proposed liquid composition, its previous reconstitution in water is not necessary, so that it can be directly added over the culinary preparation, whatever its type.

The proposed composition does not burn or deteriorate when it contacts hot surfaces; it perfectly resists the cooking time because, as it contains gums, these sequester the water, a fact that causes the food coming into contact with a hot surface not to evaporate as much water and the dry residue not to burn.

The fact that the composition of the invention is a liquid and does not require or demand a time to finish melting or dissolving, makes it is possible for it to be added to food and for this being liable to be instantly consumed.

Therefore, these facts allow the use of the taste-enhancing liquid composition of the invention at any time of the culinary preparation, considering that it does not degrade with heat; thus, it can be applied:
- Before: if fish is prepared in the oven, it is possible to add the liquid composition over the raw fish, and then go on to its cooking.
- During: if chicken breasts are being grilled, when they are brown, the taste-enhancing liquid composition is added, and the cocking ends therewith.
- In the final step: using the same example of the grilled chicken breasts, the taste-enhancing liquid composition can be added at the end of the cooking, once the cooked product is on the plate.

Another possible use of the composition is in cold plates, such as legume or pasta salads.

According to one preferred exemplary embodiment of the invention said thickener preparation is a mixture of xanthan gum and guar gum, in a very low proportion (0.23% maximum) in weight relative to the total weight of the composition, but with the peculiarity that the guar gum proportion is approximately 20% smaller than that of the xanthan gum.

Thanks to the gum combination in said proportion, a composition is achieved with a texture with certain viscosity (substantially higher than that of water) that confers similar palatability to the one of a fatty product, but without providing fat, fulfilling the aim of not providing any fat along with the composition, particularly saturated and trans fats.

According to one preferred exemplary embodiment, the proposed taste-enhancing liquid composition comprises a combination of the following elements in the following proportions, together adding up to 100%:
- water, between 78-82% in weight relative to the total weight of the composition;
- flavouring, from 1% to 4% in weight relative to the total weight of the composition;
- salt, between 11-14.5% in weight relative to the total weight of the composition;
- xanthan gum, between 0.13%-0.14% in weight relative to the total weight of the composition;
- guar gum, between 0.09%-0.1% in weight relative to the total weight of the composition;
- other non-fatty components, (such as a vegetable concentrate, yeast extracts, fragments of spices and vegetables such as vegetables including onion, leek, celery, spinach, aromatic herbs) from 0.8% to 2% in weight relative to the total weight of the composition.

In one exemplary embodiment, said yeast extract is 10% 5'R yeast extract.

It has likewise been contemplated that the composition will include aromatic substances derived from alliaceous plants, including leek, onion and garlic as flavouring.

The composition can also comprise lemon juice with a proportion of 0.45% in weight relative to the total weight of the composition.

In yet another exemplary embodiment, it has been contemplated that the composition will also comprise soy sauce with a proportion of 0.07% in weight relative to the total weight of the composition.

Particularly and with reference to the composition of the previously referred example, it should be pointed out that the referred dosage mixtures of xanthan gum and guar gum confer a texture to the composition with a greater viscosity than that of water, which allows it to soak the food when being poured over it, as has been said, both while hot and cold, in a very efficient manner. It must be noted that if the texture was completely liquid, the product would flow with greater speed, which would not allow sufficient time necessary for the soaking, the composition falling to the cooking container and not being taken advantage of.

Said texture also allows to keep some fragments of spices and vegetables in suspension in the composition, conferring a sense of naturalness and a very pleasant aspect.

Also, in contrast with other known taste-enhancing compositions, its previous reconstitution in water is not necessary, and it can be added directly over a culinary preparation, whatever its type.

The described taste-enhancing liquid composition can be prepared, for example, by means of a method that comprises:
- mixing water, salt, flavouring, a thickener preparation and other non-fatty components in the proportions indicated in one or more of the exemplary embodiments;
- heating the mixture until reaching approximately 85ºC;
- filling with said heated mixture containers which are hermetically sealed;
- heating said containers up to 90ºC and maintaining them for 30 minutes at said temperature and subsequently cooling them down to 30ºC, and
- storing at room temperature.

Said mixture is carried out with medium-high type stirring and at room temperature (approx. 20ºC).

The described method is different from the one described in said international patent application WO2014/053287, relating to the preferred exemplary embodiment for not requiring an additional step of including starch into the mixture after its heating and further cooling.

Also, as a result from submitting the composition to said thermal treatment, taking into account the physic-chemical characteristics thereof, it is achieved that the unopened product be stable at room temperature for at least 12 months.

### Detailed description of an exemplary embodiment

Next, several taste-enhancing composition examples according to the invention are included.

Starting from the base composition shown in the following table, several compositions were prepared that are detailed below:

| | |
|---|---|
| Water | 79.3% |
| Flavourings | 1-5% |
| Salt | 14% |
| Xanthan gum | 0.13%-0.14% |
| Guar gum | 0.09%-0.1% |
| Fats | 0% |
| Other | 0.8-2% |

| | |
|---|---|
| Water | 81.7% |
| Flavourings | 1-5% |
| Salt | 11.4% |
| Xanthan gum | 0.13% |
| Guar gum | 0.09%-0.1% |
| Fats | 0% |
| Other | 0.8-2% |

The different prepared compositions were created providing different proposals in two main headings: "flavourings" and "other" for a common objective; obtaining the greatest capacity of taste improvement possible, always without masking the taste of the main ingredients of the original food or culinary preparation to which the composition is applied.

### • Test 1

One of the flavouring ingredients that the inventors knew for having great umami capacity is yeast extract. So, numerous tests were carried out using various possible yeast extracts, the % of ribonucleotides being the point of distinction.

Thus, the following extracts were tested in different combinations:
- 2% glutatione yeast extract
- 4.5% 5'R yeast extract
- 6% 5' yeast extract
- 10% 5'R yeast extract
- Roasted yeast extract
- Salted yeast extract
- Unsalted yeast extract

The one containing 10% 5'R yeast extract was the prototype best valued in terms of enhancement and umami.

Next, other examples of prepared compositions are indicated.

| | |
|---|---|
| Water | 80% |
| Flavourings | 1-4% |
| Aromatic substances | 3% |
| 4.5% + 2% yeast extract | 1% |
| Salt | 15% |
| Xanthan gum | 0.10% |
| Guar gum | 0.08% |
| Fats | 0% |
| Other | 0.8-2% |

| | |
|---|---|
| Water | 80% |
| Flavourings | 1-4% |
| Aromatic substances | 1% |
| 6% yeast extract + light yeast extract | 3% |
| Salt | 15% |
| Xanthan gum | 0.10% |
| Guar gum | 0.08% |
| Fats | 0% |
| Other | 0.8-2% |

| | |
|---|---|
| Water | 80% |
| Flavourings | 1-4% |
| Aromatic substances | 2% |
| Roasted yeast extract + salted yeast extract | 2% |
| Salt | 15% |
| Xanthan gum | 0.10% |
| Guar gum | 0.08% |
| Fats | 0% |
| Other | 0.8-2% |

| | |
|---|---|
| Water | 80% |
| Flavourings | 1-4% |
| Aromatic substances | 2% |
| 10% 5'R yeast extract | 2% |
| Salt | 15% |
| Xanthan gum | 0.10% |
| Guar gum | 0.08% |
| Fats | 0% |
| Other | 0.8-2% |

### • Test 2

Other ingredients useful for obtaining an effective taste enhancer are aromatic substances.

The synergies between the yeast extract and these substances were studied via various tests, the best results being obtained when aromatic substances derived from alliaceous plants (leek, onion, garlic...) were used.

Thus, the trend was to adopt this type of combination, as can be seen in the following examples:

| | |
|---|---|
| Water | 80% |
| Flavourings | 1-4% |
| Aromatic substances | 2% |
| Vegetable aromas | 1% |
| Alliaceous aromas | 1% |
| 10% 5'R yeast extract | 2% |
| Salt | 15% |
| Xanthan gum | 0.10% |
| Guar gum | 0.08% |
| Fats | 0% |
| Other | 0.8-2% |

| | |
|---|---|
| Water | 80% |
| Flavourings | 1-4% |
| Aromatic substances | 2% |
| Vegetable aromas | 0.5% |
| Alliaceous aromas | 1.5% |
| 10% 5'R yeast extract | 2% |
| Salt | 15% |
| Xanthan gum | 0.10% |
| Guar gum | 0.08% |
| Fats | 0% |
| Other | 0.8-2% |

### • Test 3

In the composition according to the invention of this test, it was further decided to include, in cooperation with the other referred ingredients, a vegetable selection such as onion, leek or celery, among others, which, after different tests, showed that their umami power was higher than that of other vegetables and, as a result, their percentage in the composition was importantly increased.

Hereinbelow, examples of the prepared compositions are indicated following the explained methodology.

| | |
|---|---|
| Water | 80% |
| Flavourings | 1-4% |
| Salt | 15% |
| Xanthan gum | 0.10% |
| Guar gum | 0.08% |
| Fats | 0% |
| Other | 0.8-2% |
| carrot | 0.60% |
| courgette | 0.50% |
| leek | 0.30% |
| onion | 0.40% |
| spinach | 0.20% |

| | |
|---|---|
| Water | 80% |
| Flavourings | 1-4% |
| Salt | 15% |
| Xanthan gum | 0.10% |
| Guar gum | 0.08% |
| Fats | 0% |
| Other | 0.8-2% |
| carrot | 0.30% |
| courgette | 0.30% |
| leek | 0.60% |
| onion | 0.60% |
| spinach | 0.20% |

| | |
|---|---|
| Water | 80% |
| Flavourings | 1-4% |
| Salt | 15% |
| Xanthan gum | 0.10% |
| Guar gum | 0.08% |
| Fats | 0% |
| Other | 0.8-2% |
| carrot | 0.30% |
| courgette | 0.10% |
| leek | 0.80% |
| onion | 0.70% |
| spinach | 0.10% |

## Claims

1. A taste-enhancing liquid composition including water, flavouring and a thickener, the composition comprising the following elements in combination, with the following proportions, together adding up to 100%:
- water, from 75% to 83% in weight relative to the total weight of the composition;
- flavouring, from 1% to 6% in weight relative to the total weight of the composition;
- salt, from 11% to 15.5% in weight relative to the total weight of the composition;
- thickener formed by a mixture of xanthan gum and guar gum proportion, from 0.15% to up to 0.24% in weight relative to the total weight of the composition;
- other non-fatty components, from 0.8% to 2% in weight relative to the total weight of the composition,
and in that, in addition, the composition does not contain oil, or fats and does not comprise starch.

2. The liquid composition according to claim 1, wherein the proportion of guar gum in weight relative to the total weight of the composition is 20% smaller than the proportion of xanthan gum.

3. The liquid composition according to claim 1 or 2 further comprising the following elements, in combination, with the following proportions, together adding up to 100%:
- water, from 77% to t 82% in weight relative to the total weight of the composition;
- flavouring, from 1% to t 4% in weight relative to the total weight of the composition;
- salt, from t 11.1% to 14.5% in weight relative to the total weight of the composition;
- xanthan gum, between 0.13%-0.14% in weight relative to the total weight of the composition;
- guar gum, between 0.09%-0.1% in weight relative to the total weight of the composition;
- other non-fatty components, from 0.8% to 2% in weight relative to the total weight of the composition.

4. The liquid composition according to claim 3, wherein said other non-fatty components include yeast extracts.

5. The liquid composition according to claim 4, wherein said yeast extract is 10% 5'R yeast extract.

6. The liquid composition according to claim 4 or 5, further containing aromatic substances derived from alliaceous plants, including leek, onion and garlic as flavouring.

7. The liquid composition according to claim 3, wherein said other non-fatty components include at least fragments of spices and/or vegetables, including onion, leek or celery, in suspension in the composition.

8. The liquid composition according to claim 3, wherein said other non-fatty components include a vegetable concentrate.

9. The liquid composition according to claim 3, wherein said other non-fatty components include aromatic herbs.

10. The liquid composition according to claim 3, further comprising lemon juice with a proportion of 0.45% in weight relative to the total weight of the composition.

11. The liquid composition according to claim 3, further comprising soy sauce with a proportion of 0.07% in weight relative to the total weight of the composition.

12. Use of a taste-enhancing liquid composition according to claim 3, in a culinary preparation soaking it by pouring the taste-enhancing liquid composition over the culinary preparation

13. The use according to claim 12, wherein said pouring of the taste-enhancing liquid composition is carried out over a culinary preparation while hot or cold.

## Patentansprüche

1. Flüssige Geschmacksverstärkerzusammensetzung, die Wasser, Aromastoffe und ein Verdickungsmittel enthält, wobei die Zusammensetzung die folgenden kombinierten Elemente in folgenden Anteilen umfasst, die zusammen 100 % ergeben:
- Wasser, von 75 bis 83 Gew.-%, bezogen auf das Gesamtgewicht der Zusammensetzung;
- Aromastoffe, von 1 bis 6 Gew.-%, bezogen auf das Gesamtgewicht der Zusammensetzung;
- Salz, von 11 bis 15,5 Gew.-%, bezogen auf das Gesamtgewicht der Zusammensetzung;
- Verdickungsmittel, bestehend aus einer Mischung aus Xanthan und Guaran in einem Anteil von 0,15 bis 0,24 Gew.-%, bezogen auf das Gesamtgewicht der Zusammensetzung;
- andere Nichtfettkomponenten, von 0,8 bis 2 Gew.-%, bezogen auf das Gesamtgewicht der Zusammensetzung,
wobei die Zusammensetzung ferner kein Öl bzw. keine Fette und keine Stärke enthält.

2. Flüssige Zusammensetzung nach Anspruch 1, wobei der Gewichtsanteil von Guaran in Bezug auf das Gesamtgewicht der Zusammensetzung um 20 % niedriger als der Anteil von Xanthan ist.

3. Flüssige Zusammensetzung nach Anspruch 1 oder 2, ferner umfassend die folgenden kombinierten Elemente in folgenden Anteilen, die zusammen 100 % ergeben:
- Wasser, von 77 bis 82 Gew.-%, bezogen auf das Gesamtgewicht der Zusammensetzung;
- Aromastoffe, von 1 bis 4 Gew.-%, bezogen auf das Gesamtgewicht der Zusammensetzung;
- Salz, von 11,1 bis 14,5 Gew.-%, bezogen auf das Gesamtgewicht der Zusammensetzung;
- Xanthan, zwischen 0,13 und 0,14 Gew.-%, bezogen auf das Gesamtgewicht der Zusammensetzung;
- Guaran, zwischen 0,09 und 0,1 Gew.-%, bezogen auf das Gesamtgewicht der Zusammensetzung;
- andere Nichtfettkomponenten, von 0,8 bis 2 Gew.-%, bezogen auf das Gesamtgewicht der Zusammensetzung.

4. Flüssige Zusammensetzung nach Anspruch 3, wobei die genannten anderen Nichtfettkomponenten Hefeextrakte enthalten.

5. Flüssige Zusammensetzung nach Anspruch 4, wobei der genannte Hefeextrakt 10 % 5'R Hefeextrakt ist.

6. Flüssige Zusammensetzung nach Anspruch 4 oder 5, die ferner aus Allium-Pflanzen gewonnene aromatische Substanzen, darunter Lauch, Zwiebel und Knoblauch, als Aromastoffe enthält.

7. Flüssige Zusammensetzung nach Anspruch 3, wobei die genannten anderen Nichtfettkomponenten mindestens Fragmente von Gewürzen und/oder Gemüse, darunter Zwiebel, Lauch oder Sellerie, suspendiert in der Zusammensetzung enthalten.

8. Flüssige Zusammensetzung nach Anspruch 3, wobei die genannten anderen Nichtfettkomponenten ein Gemüsekonzentrat enthalten.

9. Flüssige Zusammensetzung nach Anspruch 3, wobei die genannten anderen Nichtfettkomponenten aromatische Kräuter enthalten.

10. Flüssige Zusammensetzung nach Anspruch 3, die ferner Zitronensaft in einem Anteil von 0,45 Gew.-%, bezogen auf das Gesamtgewicht der Zusammensetzung, enthält.

11. Flüssige Zusammensetzung nach Anspruch 3, die ferner Sojasauce in einem Anteil von 0,07 Gew.-%, bezogen auf das Gesamtgewicht der Zusammensetzung, enthält.

12. Verwendung einer flüssigen Geschmacksverstärkerzusammensetzung nach Anspruch 3 in einer Lebensmittelzubereitung, wobei die Lebensmittelzubereitung durch Übergießen mit der flüssigen Geschmacksverstärkerzusammensetzung getränkt wird.

13. Verwendung nach Anspruch 12, wobei das genannte Gießen der flüssigen Geschmacksverstärkerzusammensetzung über eine Lebensmittelzubereitung im heißen oder kalten Zustand erfolgt.

## Revendications

1. Une composition liquide qui met en valeur le goût, comprenant de l'eau, un aromatisant et un épaississant, la composition comprenant les éléments suivants en combinaison avec les proportions suivantes, totalisant en tout les 100% :
- eau, de 75% à 83% du poids par rapport au poids total de la composition ;
- aromatisant, de 1% à 6% du poids par rapport au poids total de la composition ;
- sel, de 11% à 15,5% du poids par rapport au poids total de la composition ;
- épaississant formé par une proportion de mélange de gomme xanthane et gomme de guar de 0,15% à 0,24% du poids par rapport au poids total de la composition ;
- autres composants non gras, de 0,8% à 2% du poids par rapport au poids total de la composition ; et en ce que, en plus, la composition ne contient pas d'huile ou de graisses et ne contient pas d'amidon.

2. La composition liquide conformément à la revendication 1, où la proportion de gomme de guar du poids par rapport au poids total de la composition est de 20% inférieure à la proportion de gomme xanthane ;

3. La composition liquide conformément à la revendication 1 ou 2 comportant en plus les éléments suivants, en combinaison, ayant les proportions suivantes, totalisant en tout les 100% :
- eau, de 77% à 82% du poids par rapport au poids total de la composition ;
- aromatisant, de 1% à 4% du poids par rapport au poids total de la composition ;
- sel, de 11,1% à 14,5% du poids par rapport au poids total de la composition ;
- gomme xanthane, de 0,13% à -0,14% du poids par rapport au poids total de la composition ;
- gomme de guar, de 0,09% à -0,1% du poids par rapport au poids total de la composition ;
- autres composants non gras, de 0,8% à 2% du poids par rapport au poids total de la composition.

4. La composition liquide conformément à la revendication 3, où ces autres composants non gras comprennent des extraits de levure.

5. La composition liquide conformément à la revendication 4, où cet extrait de levure est un extrait de levure de 10% 5'R.

6. La composition liquide conformément à la revendication 4 ou 5, contenant en plus des substances aromatiques dérivées de plantes alliacées, comprenant poireau, oignon et ail comme aromatisants.

7. La composition liquide conformément à la revendication 3, où ces autres composants non gras comprennent au moins des fragments d'espèces et/ou de légumes, comprenant oignon, poireau ou céleri, en suspension dans la composition.

8. La composition liquide conformément à la revendication 3, où ces autres composants non gras comprennent un concentré de légumes.

9. La composition liquide conformément à la revendication 3, où ces autres composants non gras comprennent des herbes aromatiques.

10. La composition liquide conformément à la revendication 3, comprenant en plus du jus de citron dans une proportion de 0,45% du poids par rapport au poids total de la composition ;

11. La composition liquide conformément à la revendication 3, comprenant en plus de la sauce de soja dans une proportion de 0,07% du poids par rapport au poids total de la composition ;

12. Utilisation d'une composition liquide de mise en valeur du goût conformément à la revendication 3, dans une préparation culinaire, qui est trempée en versant la composition liquide de mise en valeur du goût sur la préparation culinaire.

13. L'utilisation conformément à la revendication 12, où cette composition liquide de mise en valeur du goût est versée sur une préparation culinaire pendant qu'elle est chaude ou froide.
